Europäisches Patentamt

European Patent Office

Office européen des brevets

(11) Publication number: **0 448 876 A2**

# EUROPEAN PATENT APPLICATION

(21) Application number: 90313798.2

(51) Int. Cl.⁵: **A62B 23/02**

(22) Date of filing: **18.12.90**

(30) Priority: **29.03.90 US 501152**

(43) Date of publication of application:
**02.10.91 Bulletin 91/40**

(84) Designated Contracting States:
**DE FR GB SE**

(71) Applicant: **MINNESOTA MINING AND MANUFACTURING COMPANY**
**3M Center, P.O. Box 33427**
**St. Paul, Minnesota 55133-3427(US)**

(72) Inventor: **Johansson, Ronald, C. c/o**

Minnesota Mining and
Manufact. Co., 2501 Hudson Road, P.O. Box 33427
St. Paul, Minnesota 55133-3427(US)
Inventor: **Elstran, Gerald V., c/o Minnesota Mining and**
Manufact. Co., 2501 Hudson Road, P.O. Box 33427
St. Paul, Minnesota 55133-3427(US)

(74) Representative: **Baillie, Iain Cameron et al**
c/o Ladas & Parry Isartorplatz 5
W-8000 München 2(DE)

(54) **Filter cartridge.**

(57) A replaceable filter cartridge 40 that has a peripheral frame 44 and a sheetlike filter medium 42 can be made in a simple, inexpensive, insert-molding operation. The mold 10 has a cavity 14 for producing a peripheral frame 30 and shutoffs 16,20 permitting each end of the strip 42 to extend across the cavity 14. Resin injected into the cavity 14 flows through and disrupts the continuity of the strip 42 where it extends across the cavity 14, preferably fusing fibers of the filter medium 42 into the resin that forms the frame 30. When the filter medium 42 is pleated, its longitudinal edges are sealed to the frame 44 in a serpentine path.

Fig. 1

## Background of the Invention

### Field of the Invention

The invention concerns filter elements or cartridges of the type having a peripheral frame and a sheetlike filter medium. More specifically, the invention concerns filter cartridges for positive pressure respiratory protection devices which provide dust/mist/fume or high efficiency particulate air ("HEPA") rated protection for an individual wearing the device.

### Description of the Related Art

Replaceable filter cartridges of the type having a peripheral frame and either pleated or a flat sheetlike filter medium are often used in respirator masks and in powered air purifying respirators. They desirably have HEPA quality filtration performance, i.e., showing less than 0.03% particle penetration when challenged with a thermally generated 0.3 micrometer dioctyl phthalate aerosol at a flow rate of 85 l/min. Filter media suitable for HEPA filter cartridges include glass fibers, webs based on electret-containing split film fibers, solution blown microfibers (i.e. polycarbonate microfibers) and melt blown microfibers, preferably polyolefin based electret-containing melt blown microfibers such as polypropylene.

In the manufacture of replaceable HEPA filter cartridges of the type having a peripheral frame and a sheet-like filter medium, the medium typically is sealed to the frame by an adhesive. Sometimes this is done by positioning the edges of the filter medium in contact with the frame and squirting the adhesive against the frame. When the frame is cylindrical, the adhesive can be applied to the inner wall of the frame by centrifugal force. Regardless of how the adhesive is applied, doing so is labor intensive, and there is a hazard that the entire periphery might not be perfectly sealed.

In U.S Pat. No. 3,183,285 (Boylan), after an expansible plastic compound is poured into a peripheral channel of a border frame mold, the edges of the filter medium are moved into contact with the plastic compound. An upper mold member is clamped to close the channel and pinch the filter medium along a line just inside the periphery of the filter medium. Then the plastic compound is allowed to expand to the limits of the closed channel, thus impregnating only that portion of the filter medium that extends into the channel, after which the completed filter assembly (cartridge) is removed from the mold.

By using a pleated filter medium, a filter cartridge can have both a small peripheral frame and a large surface area to produce a filter having a low pressure drop, but pleating makes it more difficult to seal a filter medium to a frame. U.S. Pat. No. 3,183,286 (Harms) concerns a method similar to that of the Boylan patent except that the filter medium is pleated. The edges of the pleats are pinched between interlocking male and female jig members. The expansible plastic compound is then applied to flat panels which are moved into position to enclose channels encompassing the edges of the pleats that protrude from the interlocking jig members, and the plastic compound is allowed to expand to fill the channels, thus impregnating only those portions of the pleated filter medium that extend into the channels.

U.S. Pat. No. 3,235,633 (Holloway et al.) concerns a replaceable filter element (cartridge) that has a pleated filter medium, the edges of which are sealed by a foamable polyurethane resin. The method of making the Holloway filter element differs from that of the Harms patent in that the so-called border frame zone or mold into which the foamable resin is poured is not closed.

U.S. Pat. No. 3,695,012 (Rolland) shows a gas permeable pleated filter medium, each end of which is secured to a housing by a pair of clips that may provide a sufficient seal between the filter medium and the housing so that no further sealant is needed therebetween. While the filter medium is held by those clips, the housing is completed by forming two end walls, e.g., by molding or dipping in a hardenable liquid plastic, to encapsulate the pleated edges of the filter medium.

U.S. Pat. No. 3,869,392 (Wolf) says that prior pleated filter cartridges lacked sufficient strength or stiffness to resist distortion when sealed into a housing, and says that this problem is overcome by metal reinforcing strips at the ends of the folds. A unitary structure (filter cartridge) is assembled by molding a frame in situ about each end fold of the filter medium while the reinforcing member is in position.

U.S. Pat. No. 4,386,948 (Chokski et al.) also shows a filter device (cartridge) containing a pleated filter medium.

### Other Prior Art

After describing problems with respirator masks having filter cartridges, U.S. Pat. No. 3,861,381 (Witman) describes injection molding the shell (facepiece) of a respirator mask so that it flows around the edges of a filter medium. "The mold which shapes the shell and holds the filter during molding is provided with compression areas which pinch off the major portion of the filter while allowing the material of the shell to penetrate a predetermined distance into the filter thereby encapsulating and sealing the edges of the filter and joining it to the shell. Support pins may be used in the mold to locate the filter prior to the molding operation" (col. 2, lines 32-39). A "continuous circumferential portion of the filter in the vicinity of its periphery is compressed as at 14, to the point where it is no longer porous to the melted plastic, thus preventing the penetration of shell material into the working area of the filter during the molding operation" (col. 3, lines 47-54). The melted plastic flows into the interstices between the uncompressed fibers outside the lines of compression and solidified around those fibers while either melting those or otherwise becoming bonded to the periphery of the filter medium.

Witman suggests three types of fibers for his filter medium: first, high-melting fibers such as untreated glass that will be unchanged by the injected plastic; second, fibers that will melt in the injected plastic; and third, glass fiber having a chemically reactive silane coating.

U.S. Pat. No. 2,922,417 (Bradley et al.) also concerns a respirator mask that is made by molding a facepiece of a respirator mask around the edges of a filter medium. Before doing so, the edges of the filter medium are sprayed with an adhesive. By pinching the filter medium just inside the edges while the adhesive is hardening, the edges are more receptive to the plastic material that forms a facepiece.

## Summary of the Invention

The invention provides a filter cartridge having a peripheral frame surrounding a filter medium which can be produced in a simple, inexpensive insert-molding operation and is believed to be more economical and at least equal in quality to any prior filter cartridge. Briefly, the novel filter cartridge comprises a resinous peripheral frame, the inner face of which encompasses an opening, and a strip of sheetlike filter medium that can be pleated or flat and is sealed to the frame at its inner face to cover said opening completely, with each end of the strip extending across the frame and being disrupted where it extends across the frame.

Preferably, the frame is formed with a continuous sealing surface by which it can be sealed to a housing of a filtering device such as a respirator mask or a powered air purifying respirator.

The filter medium of a novel filter cartridge can contain infusible fibers such as glass fibers, fusible fibers such as thermoplastic fibers, or a mixture of fusible and infusible fibers. Preferably the fibers are predominantly thermoplastic fibers which can be at least partially fused into the resinous frame, thus enhancing the integrity of the filter cartridge. Especially preferred thermoplastic fibers are electret-containing melt blown microfibers (BMF) such as those described in U.S. Pat. No. 4,215,682 (Kubik et al.) or split film fibers such as those described in U.S. Pat. No. Re. 30,782 (van Turnhout et al.), because they exhibit high particle capture efficiencies with an accompanying low pressure drop across the filter medium. Thermoplastic filter media such as the BMF and split film filter media typically have high void volumes and consequently are relatively thick and bulky, making them difficult to handle in manufacturing operations, but they are readily incorporated into the filter cartridges of the present invention. Economy of manufacture of the novel filter cartridge is realized, in part, because the strip of filter medium need not be trimmed to a precise length prior to formation of the cartridge frame but rather, because the ends of the strip extend across the frame, they can be trimmed off after the frame has been formed.

An injection mold for producing a filter cartridge of the invention can receive a strip of sheet-like filter medium between halves which mate to form 1) inner and outer walls of a cavity for producing a peripheral frame that encompasses an opening, 2) an inner shutoff for pinching said strip along the entire inner wall, 3) outer shutoff means at the outer wall permitting each end of the strip to extend across the cavity, and 4) means for injecting resin into the cavity to flow through and disrupt each end of the strip where it extends across the cavity. Said outer shutoff means can be a single shutoff along the entire outer wall of the cavity to permit the strip of filter medium to extend across the cavity along its entire circumference. When the injection mold has a rectangular cavity, said outer shutoff means can be provided by a shutoff at each of opposite sides of the cavity, each for pinching one end of the strip of sheetlike filter medium.

Using such an injection mold, a filter cartridge of the invention can be made by the steps of:
   a) drawing a strip of sheetlike filter medium across one half of the mold,
   b) closing the mold halves around the strip with said inner shutoff pinching said strip along said entire inner wall and with each end of the strip extending across the cavity between said inner shutoff and said outer shutoff means,
   c) injecting resin into said cavity to flow through and disrupt the filter medium where it extends across the cavity and to fill the cavity,
   d) allowing the injected resin to harden, and
   e) ejecting the hardened resin and entrapped filter medium from the mold to provide a filter cartridge.
Preferably step e) is followed by the step of
   f) trimming the excess filter medium which extends from the exterior surface of the frame wall as well as trimming any gating and runner areas extending beyond the frame.

The injected resin can be either thermoplastic or thermosetting, but preferably is a thermoplastic resin that hardens quickly for rapid reuse of the mold. When the filter medium contains thermoplastic fibers, the fibers preferably comprise thermoplastic resin that is melted by the heat of the injected resin. Filter cartridges of enhanced integrity are produced if the thermoplastic resin of the fibers is miscible with the injected resin. Ideally, the same thermoplastic resin is used in making both the filter medium and the frame. Among preferred thermoplastic resins are polyolefins such as polypropylene. Preferably the injected resin contains a filler to enhance the dimensional stability and rigidity of the frame.

To the extent that the injected resin does not fuse the fibers, the filter medium should be weak enough that the resin flow will cause sufficient disruption of the continuity of the medium in those areas where it extends across the mold cavity to allow the resin to flow through the medium. If the resin flow is blocked by the filter medium, the frame can become resin-starved, and hence unduly weak where the filter medium extends across the frame. When a high proportion of the fibers is infusible, it is preferable that the filter medium be a nonwoven material rather than a woven or knitted material so that the filter medium can be more readily disrupted by the flow of injected resin. An exception to this preference would occur if the infusible fibers were so weak that a woven filter medium would be broken by the resin flow.

When the injected resin contacts fibers of a fusible filter medium, the fibers typically become more completely fused near the center of the frame than at its margins. It is believed that this happens as a consequence of cooling at the cavity walls and possibly also to retarded flow adjacent to the cavity walls. To the extent that the injected resin does not melt or fuse the filter medium fibers, it deflects them in the direction of resin flow along the margins of the frame. When the frame that forms in the cavity has a sealing surface, the flow through the filer medium preferably is directed away from the sealing surface to ensure against any roughening of the sealing surface by deflected fibers.

As has been noted, pleating of a filter medium permits a filter cartridge to have both a small peripheral frame and a low pressure drop. To accommodate a pleated filter medium, the shutoffs that receive the longitudinal edges of the strip of filter medium form a serpentine opening. When the serpentine opening accommodates steeply inclined pleats, the filter medium should be precompressed where it is contacted by the serpentine shutoffs to prevent the filter medium from being torn when the mold halves are closed. When the filter media has a high proportion of BMF, it can be precompressed to about 10% of its original thickness, which compression can be substantially retained on release of the compressive force. Filter cartridges incorporating flat or shallowly inclined pleats do not require the filter medium to be precompressed as it is not as likely to tear when the mold halves are closed.

While precompressing areas of a sheetlike filter medium that has several layers of thermoplastic fibers, heat and pressure can be simultaneously applied, e.g., ultrasonically, to portions of the medium to fuse the fibers from the various layers together, thereby affording greater integrity to the filter medium and making it easier to handle.

Filter constructions having greater integrity can be provided through the use of laminate constructions incorporating a fibrous thermoplastic scrim at one or both of the surfaces of the filter medium. Preferably the scrim is fused to the filter medium. When the filter medium is pleated, the scrim material also serves as a porous spacer material between adjacent pleats, providing for a more uniform distribution of fluid over the filter surface and minimizing reduction of the available filter surface area caused when adjacent pleats come into contact with each other and would otherwise "blind-off" those areas in contact with each other.

## THE DRAWINGS

In the drawings, all figures of which are schematic.

FIG. 1 is an isometric view of an injection mold of the invention, partially cut away to a section, with a filter medium in place prior to molding a peripheral frame around the filter medium;

FIG. 2 is an isometric view a first filter medium produced with the injection mold of FIG. 1;

FIG. 3 is an isometric view of a second filter cartridge of the invention, partly cut away to a section;

FIG. 4 is an enlarged detail of a portion of the filter cartridge of FIG 3;

FIG. 5 is an isometric view of a third filter cartridge of the invention before trimming off excess filter medium; and

FIG. 6 shows the third filter cartridge after trimming.

## Detailed Description of Preferred Embodiments

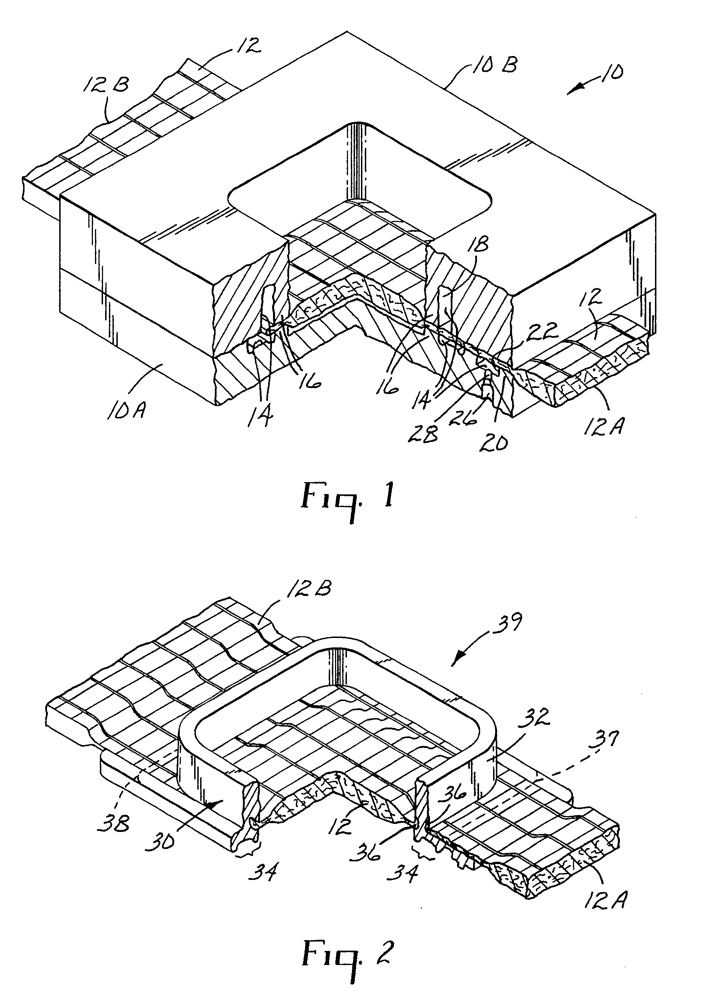

Before closing the injection mold 10 of FIG. 1, a flat strip of sheetlike filter medium 12 of thermoplastic fibers has been drawn across the lower half 10A of the mold until its leading end 12A extends beyond one end of the mold while the trailing end 12B of the filter medium is still connected to a supply roll (not shown). The upper half 10B of the mold 10 is then closed as shown in FIG. 1 to form a cavity 14 which is shaped to form a rectangular resinous peripheral frame 30 as shown in FIG. 2. Upon doing so, the filter medium is pinched along the entire periphery of the inner wall 18 of the cavity by a shutoff 16, while a shutoff 20 (one shown) pinches the filter medium at the outer wall 22 of the cavity where the ends of the strip extend beyond the cavity. Each longitudinal edge of the filter medium 12 protrudes into the cavity 14.

Injected resin enters the mold cavity 14 through at least one runner 26 and gate 28. The flowing resin forces the filter medium 12 upwardly along horizontal portions of the cavity 14 and then flows upwardly to form an upstanding wall 32 and a continuous sealing surface 34 at the lower end of the wall. In doing so, the injected resin flows through and disrupts the filter medium where it extends across cavity 14 between the pair of shutoffs 16 and 20 and fuses the thermoplastic fibers into the injected resin. Unfused vestiges 36 of the thermoplastic fibers extend upwardly along the margins of the wall 32 and away from the sealing surface 34. After being ejected from the mold 10, another length of the filter medium is drawn across the bottom half 10A of the open mold to make another filter cartridge, and the frame 30 is trimmed along the lines 37 and 38 to provide a filter cartridge 39 of the invention.

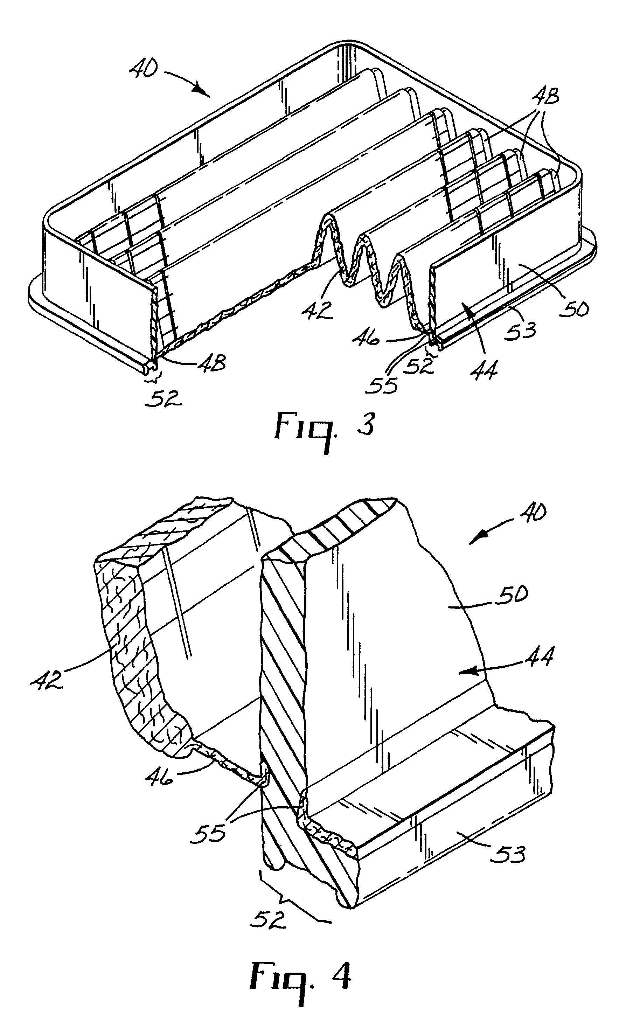

FIGS. 3 and 4 show a second filter cartridge 40 that has a pleated strip of sheetlike filter medium 42 of thermoplastic fibers sealed to a rectangular resinous peripheral frame 44. In making the filter cartridge 40, the filter medium was precompressed at its pleated edges 48. These precompressed areas were then pinched at a shutoff while the frame 44 was being formed by injection molding to produce an upstanding wall 50 with a sealing surface 52 at the lower end of the wall. The filter medium was also compressed by the shutoff at areas 46 (one shown) at the interior wall of the cavity of the mold. The filter medium has also been partially compressed at the trimmed outer edge 53 of the sealing surface 52 by the injected resin as it flowed into the mold cavity where the peripheral frame 44 was formed. In those areas where the filter medium 42 had extended across the cavity in which the peripheral frame 44 was formed, thermoplastic fibers have been partially fused into the resinous frame, and vestiges 55 of the fibers have been partially displaced to extend upwardly along the sides of the upstanding wall 50.

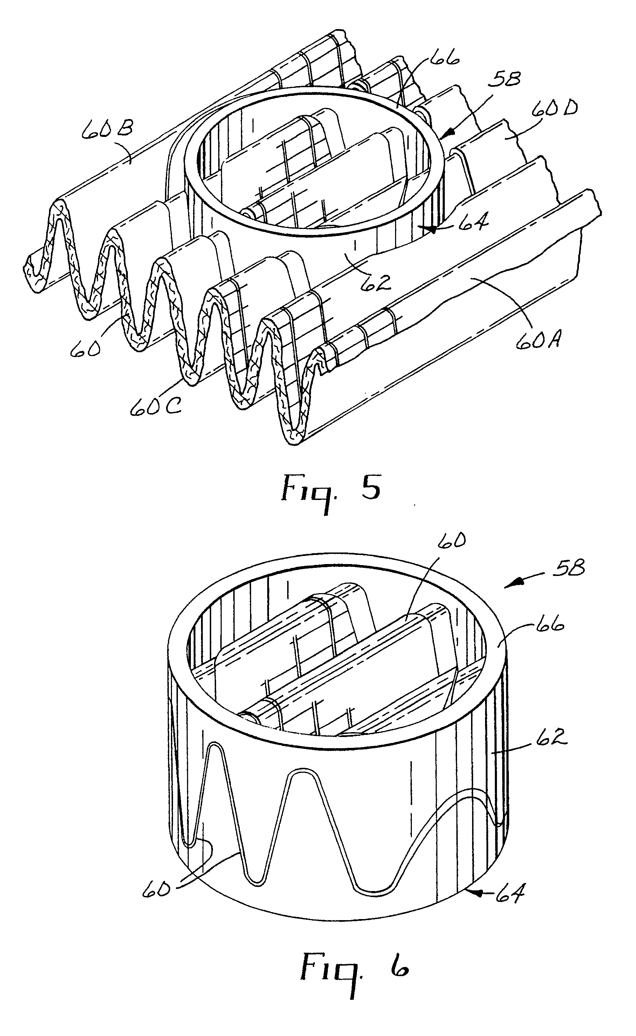

FIG. 5 shows an intermediate stage in the manufacture of the third filter cartridge 58 of FIG. 6 that has been made with a substantially continuous length of pleated sheetlike filter medium 60. In FIG. 5, both the leading and trailing ends 60A and 60B of a strip of the filter medium and its longitudinal edges 60C and 60D extend beyond the upstanding cylindrical wall 62 that forms a peripheral frame 64 and has a sealing surface 66. After ejection from the mold, the filter medium 60 is trimmed along the outer face of the upstanding wall 62 to provide the filter cartridge 58 of FIG. 6.

By employing an array of injection molds or a mold with multiple cavities, several of the filter cartridges 58 can be produced simultaneously.

It is understood that the present invention may encompass a wide variety of filter cartridge shapes beyond the cylindrical and square or rectangular shaped filter cartridges which have been discussed above.

## TESTING

### DOP TESTING

DOP testing was conducted in accordance with C.F.R. 11 subpart K, para. 11.140-11.

### PRESSURE DROP TESTING

Pressure drop across the filter cartridge was determined according to procedures described in C.F.R. 11 subpart K, para. 11.140-9 except that the filter cartridges were not loaded with silica dust prior to measuring the pressure drop.

### EXAMPLE 1

A filter cartridge having a configuration shown in Figure 2 was molded to have an interior opening measuring 3.7 cm X 3.7 cm and upstanding walls 1.0 cm high and 0.3 cm thick. Its filter medium consisted of six layers of an electret containing BMF web (each layer having a 55 gm/m² basis weight) with a polypropylene scrim covering each face. The filter medium was inserted into an injection molding tool as shown in Figure 1, the mold closed and a filled polypropylene resin was injected into the mold. The injection molding tool was mounted in a Morgan-Press molding machine equipped with an approximately 60 cm³ (2 oz.) capacity plunger. Resin was injected into the mold at approximately 230°C (450°F). After cooling, the filter cartridge was removed from the mold and excess filter medium, gating and runner areas were trimmed from the frame.

### EXAMPLE 2

A large number of filter cartridge having a configuration similar to that shown in Figure 3 were prepared using the filter medium as described in Example 1 except having 10 pleats, each pleat 3.0 cm high. The apex of each pleat was spaced 1.1 cm from that of adjacent pleats and had inside pleat seal-off radius of 0.17 cm. The filter medium had been precompressed to about 0.1 cm along its lateral edges and then pre-pleated to the previously described dimensions prior to insertion into the molding tool. The filter cartridge frame was formed by injecting a general purpose polypropylene resin into the mold. Approximately 825 cm² of filter medium was contained within the frame which had an interior opening of 12.2 cm X 16.3 cm and a wall thickness of 0.25 cm.

The resulting filter cartridges showed an average DOP penetration of less than 0.01% and an average pressure drop of 6.5 mm $H_2O$ at a flow rate of 85 liters/min.

**Claims**

1. A filter cartridge 40 comprising
   a resinous peripheral frame 44 which has inner faces that encompass an opening, and
   a strip of sheetlike filter medium 42 sealed to the frame 44 at its inner face to cover said opening completely, with each end of the strip 42 extending across the frame 44 and the continuity of the strip 42 being disrupted where it extends across the frame 44.

2. A filter cartridge 40 as defined in claim 1 wherein the filter medium 42 comprises thermoplastic fibers that are fused into the frame 44 where the filter medium 42 crosses the frame 44.

3. A filter cartridge 40 as defined in claim 2 wherein the thermoplastic fibers, where the filter medium 42 extends across the frame 44, are more completely fused near the center of the frame 44 than at its margins.

4. A filter cartridge 40 as defined in claim 2 wherein the thermoplastic fibers 42 comprise blown microfibers.

5. A filter cartridge 40 as defined in claim 1 wherein the frame 44 contains unfused fibers that are deflected where the filter medium 42 extends across the frame 44.

6. A filter cartridge 40 as defined in claim 5 wherein the thermoplastic fibers, where the filter medium 42 extends across the frame 44, are displaced away said sealing surface along the margins of the frame 44.

7. An injection mold 10 for producing a filter cartridge 39 and comprising means for receiving a strip of sheet-like filter medium 12 between halves which mate to form 1) inner and outer walls 18,22 of a cavity 14 for producing a peripheral frame 30, 2) a shutoff 16 for pinching said strip 12 along said entire inner wall 18, 3) shutoff means 20 at said outer wall 22 permitting each end of the strip 12 to extend across the cavity 14, and 4) means for injecting resin into the cavity 14 to flow through and disrupt each end of the strip 12 where it extends across the cavity 14.

8. An injection mold 10 as defined in claim 7 wherein said inner shutoff 16 forms a serpentine path to receive the longitudinal edges of a pleated strip of filter medium 12.

9. An injection mold 10 as defined in claim 7 wherein said shutoff means is a single shutoff 20 along the entire outer wall 22 of the cavity 14 to permit the strip of filter medium 12 to extend across the cavity 14 along its entire perimeter.

10. An injection mold 10 as defined in claim 7 wherein said inner 18 and outer 22 walls encompass a rectangular cavity 14, and said shutoff means include a shutoff 20 at the outer wall 22 of each of opposite sides of the cavity 14, each shutoff 20 for receiving one end of the strip of filter medium 12.

Fig. 1

Fig. 2

Fig. 3

Fig. 4

Fig. 5

Fig. 6